# EUROPÄISCHE PATENTSCHRIFT

(11) **EP 3 478 992 B1**
(45) Veröffentlichungstag und Bekanntmachung des Hinweises auf die Patenterteilung: **29.04.2020**
(21) Anmeldenummer: 16735842.3
(22) Anmeldetag: 29.06.2016
(51) Int. Cl.: F16H 63/34, B60K 1/00, B60T 1/00, B60T 1/06, F16D 63/00

(54) **PARKSPERRENEINHEIT UND ELEKTROANTRIEBSANORDNUNG MIT EINER PARKSPERRE**
PARKING LOCK UNIT, AND ELECTRIC DRIVE ARRANGEMENT HAVING A PARKING LOCK
UNITÉ FREIN DE STATIONNEMENT ET ENSEMBLE DE PROPULSION ÉLECTRIQUE COMPRENANT UN FREIN DE STATIONNEMENT

(43) Veröffentlichungstag der Anmeldung: 08.05.2019
(73) Patentinhaber: GKN Driveline Bruneck AG, 39031 Bruneck (IT)
(72) Erfinder: GRUBER, Ivan, 39040 Schabs (IT); UCAR, Manuel, 6170 Zirl (AT); WAGGER, Klaus, 39031 Bruneck (IT)
(74) Vertreter: Neumann Müller Oberwalleney & Partner Patentanwälte
(86) Internationale Anmeldenummer: PCT/EP2016/065185
(87) Internationale Veröffentlichungsnummer: WO 2018/001476

(56) Entgegenhaltungen:
- DE-A1-102009 023 498
- DE-A1-102011 015 691
- DE-B- 1 530 587
- US-A1- 2011 203 898

## Beschreibung

Die Erfindung betrifft eine Parksperre für eine Elektroantriebsanordnung zum Antreiben eines Kraftfahrzeugs, sowie eine Elektroantriebsanordnung mit einer elektrischen Maschine als Antriebsquelle und mit einer Parksperre.

Parksperren werden in Antriebssträngen von Kraftfahrzeugen eingesetzt, um ein Antriebsbauteil im Antriebsstrang optional zu blockieren, so dass das Kraftfahrzeug an einem unbeabsichtigten Wegrollen gehindert wird, wenn die elektrische Maschine kein Drehmoment zur Verfügung stellt. Eine Parksperre kann ein mit einem Antriebsbauteil des Antriebsstrangs verbundenes Sperrenrad, ein mit dem Sperrenrad zusammenwirkendes Sperrelement, und einen Aktuator zum Betätigen des Sperrelements umfassen. Das Sperrelement kann durch entsprechende Betätigung des Aktuators in eine Schließposition überführt werden, in der das Sperrelement das Sperrenrad blockiert, und in eine Freigabeposition, in der das Sperrelement das Sperrenrad freigibt.

Aus der DE 10 2011 015 691 A1 ist eine elektrische Antriebsvorrichtung für ein Kraftfahrzeug mit einem Elektromotor sowie einem hierzu axial benachbarten Differential und einer Kupplung bekannt. Der Elektromotor ist koaxial zu einer angetriebenen Achse angeordnet, dessen Rotordrehmoment auf eine Abtriebs-Hohlwelle übertragbar ist. Die Abtriebs-Hohlwelle ist mit einem Eingang des Differentials gekoppelt. Das Differential hat zwei Ausgangswellen, von denen eine die Abtriebs-Hohlwelle koaxial durchsetzt. Die Abtriebs-Hohlwelle ist über die Kupplungsvorrichtung schaltbar mit dem Rotor des Elektromotors gekoppelt. Außerhalb des Elektromotors sind eine elektrisch ansteuerbare Auslösevorrichtung zur Schaltung der Kupplungsvorrichtung sowie eine Parksperrenvorrichtung vorgesehen.

Aus der DE 10 2009 023 498 A1 ist eine Elektroantriebsanordnung mit einem Elektromotor, einem Stirnradgetriebe und einem Differentialgetriebe bekannt. Es ist eine Parksperrenanordnung vorgesehen, um die Drehbewegung einer Antriebswelle der Anordnung zu hemmen, so dass das Kraftfahrzeug an einem unbeabsichtigten Wegrollen gehindert wird. Die Parksperrenanordnung umfasst einen Sperrmechanismus mit einer Sperrklinke und einem Sperrenrad sowie einen elektromagnetischen Aktuator zum Betätigen des Sperrmechanismus. Das Sperrenrad ist mit einer Zwischenwelle des Stirnradgetriebes verbunden, die mit radialem Versatz zwischen der Antriebsachse des Elektromotors und der Drehachse des Differentialgetriebes angeordnet ist.

Aus der DE 10 2014 219 341 A1 ist eine Parksperrenanordnung für einen Antriebsstrang eines Kraftfahrzeugs bekannt. Die Parksperrenanordnung umfasst einen Sperrmechanismus mit einem Riegel und einem Aktuator. Der Aktuator wirkt zur Verstellung des Riegels aus der Schließstellung in die Freigabestellung direkt auf den Riegel ein.

Aus der US 2011/0203898 A1 ist eine Elektroantriebsanordnung mit einer elektrischen Maschine als Antriebsquelle, einem im Leistungspfad nachgelagerten Untersetzungsgetriebe, das eine von der elektrischen Maschine eingeleitete Drehbewegung vom Schellen ins Langsame übersetzt, sowie ein Differentialgetriebe, das ein vom Untersetzungsgetriebe eingeleitetes Drehmoment auf zwei Ausgangswellen aufteilt. Zur Drehmomentübertragung ist zwischen der elektrischen Maschine und dem Untersetzungsgetriebe eine Zwischenwelle vorgesehen. An der Zwischenwelle ist ein Parksperrenrad vorgesehen, mit welcher der Antriebsstrang nach Bedarf blockiert werden kann.

Aus der DE 10 2013 208 976 A1 ist eine elektrische Antriebsvorrichtung mit einem Elektromotor und einer Getriebeeinrichtung bekannt. In dem Elektromotor kann eine mechanische Parksperre integriert sein.

Der vorliegenden Erfindung liegt als Aufgabe zugrunde, eine Parksperre für einen Elektroantrieb zum Antreiben eines Kraftfahrzeugs vorzuschlagen, die sich konstruktiv einfach in den Elektroantrieb integrieren lässt beziehungsweise eine einfache Montage ermöglicht und die zu einer kompakten Bauweise beiträgt. Die Aufgabe besteht ferner darin, eine Elektroantriebsanordnung mit einer Parksperre vorzuschlagen, bei der die Parksperre auf einfache und kompakte Weise in den Antriebsstrang der Elektroantriebsanordnung integriert ist.

Eine Lösung besteht in einer Parksperreneinheit für einen Elektroantrieb zum Antreiben eines Kraftfahrzeugs, umfassend: ein Parksperrengehäuse, das einen Bodenabschnitt mit einer ersten Lageraufnahme sowie an einem bodenseitigen Ende Verbindungselemente zum Verbinden des Parksperrengehäuses mit einem Gehäuseabschnitt des Elektroantriebs aufweist; einen hülsenförmigen Wellenansatz, der in der ersten Lageraufnahme um eine Drehachse drehbar gelagert ist, wobei der Wellenansatz ein Verbindungsprofil zum drehfesten Verbinden mit einer Antriebswelle des Elektroantriebs aufweist; ein Sperrenrad, das mit dem Wellenansatz drehfest verbunden ist und in einem Aufnahmeraum zwischen dem Bodenabschnitt und dem Deckelabschnitt aufgenommen ist; ein Sperrelement, das in dem Parksperrengehäuse bewegbar gelagert ist und in eine Schließposition überführbar ist, in der das Sperrelement eine Drehbewegung des Sperrenrads blockiert, und in eine Freigabeposition, in der das Sperrelement das Sperrenrad freigibt, so dass das Sperrenrad und die damit verbundene Hohlwelle frei drehbar sind; und einen steuerbaren Aktuator, der mit dem Parksperrengehäuse verbunden ist und ausgestaltet ist, um das Sperrelement wahlweise in die Schließposition oder die Freigabeposition zu überführen; wobei ein kleinster Innendurchmesser des Parksperrengehäuses im Bereich des Sperrenrads im Wesentlichen einem größten Außendurchmesser des Sperrenrads entspricht.

Ein Vorteil ist, dass die Parksperreneinheit einfach aufgebaut ist und als Baueinheit auf einfache Weise an einen hierzu getrennt ausgeführten Elektroantrieb montiert werden kann. Dabei ist der Anpassungsaufwand an einen bestehenden Elektroantrieb, der keine Parksperre aufweist, nur gering. Besonders vorteilhaft ist, dass die Herstellung eines Elektroantriebs mit und ohne Parksperre auf einer Fertigungslinie erfolgen kann. Der Elektroantrieb kann für beide Optionen gleich hergestellt werden. Bei Anwendungen, in denen eine Parksperre erforderlich ist, kann dieser als Baueinheit an den Elektroantrieb angeflanscht werden. Unter Baueinheit wird in diesem Zusammenhang insbesondere eine vormontierte, funktionsfähige Einheit mit unverlierbaren Teilen verstanden. Die Parksperreneinheit kann auch als Parksperrenmodul bezeichnet werden.

Die Parksperreneinheit hat zwei Schnittstellen, nämlich die Verbindungselemente zum Anschließen der Parksperreneinheit an das Gehäuse des Elektroantriebs sowie das Verbindungsprofil des Wellenansatzes zum drehfesten Verbinden des Sperrenrads mit einer Antriebswelle des Elektroantriebs. Der Wellenansatz kann insbesondere mittels Steckverbindung mit der Antriebswelle des Elektroantriebs drehfest verbunden werden, beispielsweise mittels einer Wellenverzahnung (Splines). Das Anschließen des Parksperrengehäuses mit dem Gehäuse des Elektroantriebs kann beispielsweise mittels Flansch- beziehungsweise Schraubverbindungen erfolgen.

Die Parksperreneinheit kann - je nach Aufbau des jeweiligen Elektroantriebs und der gegebenen Bauraumverhältnisse - prinzipiell an verschiedenen Stellen des Elektroantriebs angeschlossen werden. Insbesondere kann die Parksperreneinheit in koaxialer Anordnung zur Motorwelle angeordnet werden. Es versteht sich jedoch, dass die Parksperreneinheit auch an anderen Antriebswellen des Elektroantriebs angeordnet werden kann, beispielsweise in koaxialer Anordnung zu einer Getriebewelle. Der modulare Aufbau der Parksperre erlaubt vielseitige Anwendungsmöglichkeiten, wobei der Anpassungsaufwand an bestehende Elektroantriebe gering ist.

Ein kompakter Aufbau der Parksperreneinheit wird dadurch erreicht, dass der Innendurchmesser des Parksperrengehäuses im Bereich des Sperrenrads im Wesentlichen dem Außendurchmesser des Sperrenrads entspricht. Hiermit ist gemeint, dass der Durchmesser des Gehäuses im Wesentlichen an dem Durchmesser des Sperrenrads orientiert ist. Damit sich das Sperrenrad im Gehäuse frei drehen kann, ist zwischen dem Sperrenrad und der Innenwandung des Gehäuses ein Radialspalt gebildet. Für eine radial kompakte Anordnung kann insbesondere vorgesehen sein, dass der Innendurchmesser des Parksperrengehäuses im Bereich des Sperrenrads kleiner ist als das 1,3-fache des Außendurchmessers des Sperrenrads, vorzugsweise kleiner als das 1,2-fache des Außendurchmessers des Sperrenrads. Das Parksperrengehäuse kann ferner eine axiale Länge aufweisen, die kleiner ist als das 1,5-fache der axialen Länge des Wellenansatzes beträgt.

Der Wellenansatz, welcher mit einer Antriebswelle des Elektroantriebs zu verbinden ist, dient im Wesentlichen dazu, das Sperrenrad mit der Antriebswelle zu verbinden. Vom Wellenansatz wird kein Drehmoment auf weitere Bauteile übertragen. Mit anderen Worten weist der Wellenansatz zur Momenteneinleitung ausschließlich das Verbindungsprofil zum drehfesten Verbinden mit der Ausgangswelle der Elektroantriebsanordnung sowie die Verbindung mit dem Sperrenrad auf.

Das Parksperrengehäuse kann einen Deckelabschnitt aufweisen, welcher den Aufnahmeraum, in dem das Sperrenrad aufgenommen ist, nach außen begrenzt beziehungsweise verschließt. In einer Ausführungsform kann der Deckelabschnitt als geschlossener Deckel gestaltet sein. In einer weiteren Ausführungsform kann der Deckelabschnitt eine zweite Lageraufnahme für eine Ausgangswelle des Differentialgetriebes aufweisen. Diese Ausführungsform kommt bei koaxialer Anordnung des Sperrenrads zur Motorwelle und zur Ausgangswelle in Frage. Nach einer möglichen Konkretisierung kann sich das deckelseitige Ende des Wellenansatzes bis in die Durchgangsbohrung des Deckelabschnitts axial hinein erstrecken. Auf diese Weise kann Schmiermittel, welches innerhalb des Wellenansatzes entlangfließt bis in den Bereich der Lagerung der Ausgangswelle im Deckelabschnitt gelangen, um dieses zu schmieren.

Die Parksperrenanordnung kann nach einer beispielhaften Ausführungsform ein axial bewegbares Betätigungsglied aufweisen, das vom Aktuator in eine erste axiale Richtung bewegbar ist und das von Federmitteln in einer zur ersten Richtung entgegengesetzte zweite Richtung beaufschlagt wird. Das Betätigungsglied wirkt insbesondere derart mit dem Sperrelement zusammenwirkt, dass das Betätigungsglied bei Bewegen in die erste axiale Richtung das Sperrelement freigibt und bei Bewegen in die zweite axiale Richtung das Sperrelement in die Schließstellung beaufschlagt. In Schließstellung greift das Sperrelement formschlüssig in das Sperrenrad ein, so dass das Sperrenrad und der damit verbundene Antriebsstrang blockiert sind. In freigegebenem Zustand kann das Sperrenrad frei drehen, so dass eine vom Elektromotor eingeleitete Drehbewegung auf den Antriebsstrang übertragen wird.

Das Sperrelement kann nach einer ersten Möglichkeit in Form einer schwenkbar gelagerten Sperrklinke gestaltet sein oder, nach einer zweiten Möglichkeit, in Form eines linear bewegbaren Sperrriegels. Es können Federmittel vorgesehen sein, die das Sperrelement in die Freigabestellung beaufschlagen. Das Sperrelement hat Eingriffsmittel, die derart gestaltet sind, dass sie formschlüssig in die Kontur des Sperrenrads eingreifen beziehungsweise von diesem gelöst werden können.

Die Lösung der oben genannten Aufgabe besteht weiter in einer Elektroantriebsanordnung zum Antreiben eines Kraftfahrzeugs, umfassend: eine Gehäuseanordnung; eine elektrische Maschine mit einer als Hohlwelle ausgebildeten Motorwelle, die um eine Drehachse drehbar antreibbar ist; ein Untersetzungsgetriebe, das ausgestaltet ist, um ein von der Motorwelle eingeleitetes Drehmoment ins Langsame zu übersetzen, wobei das Untersetzungsgetriebe eine Getriebewelle aufweist, die zur Motorwelle versetzt angeordnet ist; ein Differentialgetriebe mit einem Differentialkorb und zwei Ausgangsrädern, wobei das Differentialgetriebe ausgestaltet ist, um eine vom Untersetzungsgetriebe auf den Differentialkorb eingeleitete Drehbewegung auf die zwei Ausgangsräder zu übertragen; wobei eine Parksperreneinheit mit einem Sperrenrad, einem Sperrelement und einem steuerbaren Aktuator, wobei das Sperrenrad koaxial zur Drehachse der Motorwelle angeordnet und mit der Motorwelle drehfest verbunden ist, wobei das Sperrelement mit dem Sperrenrad zusammenwirkt und vom Aktuator im Schließsinn ansteuerbar ist, um eine Drehbewegung des Sperrenrads zu hemmen, und im Öffnungssinn ansteuerbar ist, um das Sperrenrad freizugeben; wobei das Differentialgetriebe und die Parksperreneinheit auf entgegengesetzten Seiten des Elektromotors angeordnet sind; wobei ein erstes Gehäuseteil der Gehäuseanordnung an einem zum Differentialgetriebe entgegengesetzten Ende einen Bodenabschnitt mit einer Durchgangsöffnung aufweist, wobei die Motorwelle sich durch die Durchgangsöffnung hindurch erstreckt; wobei die Parksperrenanordnung ein Parksperrengehäuse mit einem Verbindungsabschnitt aufweist, wobei die Parksperrenanordnung von außen auf den Bodenabschnitt aufgesetzt und der Verbindungsabschnitt des Parksperrengehäuses mit dem Bodenabschnitt der Gehäuseanordnung verbunden ist; und wobei der Wellenansatz der Parksperreneinheit mit der Motorwelle der elektrischen Maschine drehfest verbunden ist.

Die Elektroantriebsanordnung bietet den Vorteil, dass der Elektromotor einerseits und das Untersetzungsgetriebe beziehungsweise das Differentialgetriebe andererseits besonders nah beieinander angeordnet sind. Insbesondere können die Motorwelle und die Getriebewelle mit axialer Überdeckung zueinander angeordnet sein. Auf diese Weise ergibt sich in diesem Zentralbereich des Elektroantriebs zwischen Elektromotor und Untersetzungsgetriebe ein besonders kompakter Aufbau. Ein weiterer Vorteil ergibt sich dadurch, wie oben bereits beschrieben, dass die Parksperreneinheit als modulare Baueinheit gestaltet werden kann, welche sich auf einfache Weise auf der Motorseite des Elektroantriebs anschließen lässt.

Das erste Gehäuseteil für die elektrische Maschine kann an einem zum Differentialgetriebe entgegengesetzten Ende einen Bodenabschnitt mit einer zentralen Öffnung aufweisen, durch die sich die Motorwelle der elektrischen Maschine hindurch erstreckt. Ein freies Ende der Motorwelle liegt damit außerhalb des Gehäuseabschnitts, in dem die elektrische Maschine aufgenommen ist. Die Parksperrenanordnung ist zur Montage von außen auf den Bodenabschnitt des Motorgehäuses aufsetzbar, wobei der Wellenansatz der Parksperreneinheit mit der Hohlwelle der elektrischen Maschine drehfest verbindbar ist und der Verbindungsabschnitt des Parksperrengehäuses mit dem Bodenabschnitt des Motorgehäuses verbindbar ist. In montiertem Zustand ist das Parksperrengehäuse fest mit dem Motorgehäuse verbunden und der Wellenansatz der Parksperreneinheit mit der Motorwelle des Elektromotors drehfest verbunden. Der Wellenansatz der Parksperreneinheit kann beispielsweise über eine Steckverbindung mit der Motorwelle der elektrischen Maschine drehfest verbunden werden. Hierfür kann der Wellenansatz eine Wellenverzahnung (Splines) aufweisen, die in eine entsprechende gegengleiche Wellenverzahnung der Motorwelle drehfest eingreifen kann.

Das Parksperrengehäuse kann einen Deckelabschnitt mit einer zentralen Durchgangsöffnung aufweisen, wobei im Deckelabschnitt ein Wellenlager zur drehbaren Lagerung einer mit dem Differentialgetriebe verbundenen Ausgangswelle vorgesehen ist. Die Ausgangswelle kann einen vom Differentialgetriebe entfernt liegenden zweiten Endabschnitt haben, der in einem Wellenlager im Deckelabschnitt um die Drehachse drehbar gelagert ist, wobei sich die Motorwelle beziehungsweise der hiermit verbundene Wellenansatz axial bis in den Deckelabschnitt des Parksperrengehäuses hineinerstreckt. Diese Ausgestaltung ermöglicht, dass Schmiermittel von der Getriebeseite durch die als Hohlwelle ausgebildete Motorwelle hindurch bis in den Bereich der vom Differentialgetriebe entfernt im Deckelabschnitt angeordneten Wellenlager der Ausgangswelle gelangen kann, um dieses zu schmieren.

Nach einer möglichen Ausgestaltung kann die Elektroantriebsanordnung einen Drehimpulsgeber zum Sensieren einer Drehstellung der elektrischen Maschine aufweisen, wobei der Drehimpulsgeber insbesondere in einem zwischen dem Bodenabschnitt des ersten Gehäuseteils und dem Bodenabschnitt der Parksperrenanordnung gebildeten ringförmigen Aufnahmeraum angeordnet sein kann.

Nach einer Ausführungsform kann die Gehäuseanordnung ein zweites Gehäuseteil aufweisen, in dem das Differentialgetriebe angeordnet ist, sowie eine Zwischenwand, die zwischen dem ersten Gehäuseteil und dem zweiten Gehäuseteil angeordnet ist. Die Zwischenwand kann eine erste Lageraufnahme zur Aufnahme eines ersten Wellenlagers für die Motorwelle sowie eine zweite Lageraufnahme zur Aufnahme eines zweiten Wellenlagers für die Getriebewelle aufweisen. In Konkretisierung kann insbesondere vorgesehen sein, dass die Hohlwelle einen mit einem Rotor der elektrischen Maschine verbundenen Wellenabschnitt, einen in der Zwischenwand drehbar gelagerten Lagerabschnitt und ein Antriebsrad aufweist, wobei das Antriebsrad in einen hinter der Zwischenwand gebildeten Aufnahmeraum frei hineinragt. Es ist am getriebeseitigen Ende der Motorwelle folglich nur ein Wellenlager vorgesehen, so dass der Elektromotor und die Getriebeeinheit nah zueinander angeordnet werden können, was insgesamt zu einer axial kompakten Bauform in diesem Zentralbereich der Elektroantriebsanordnung führt.

In weiterer Konkretisierung kann die Gehäuseanordnung eine Zwischenplatte aufweisen, die zwischen der Zwischenwand und dem zweiten Gehäuseabschnitt angeordnet ist. Ferner kann zwischen der hohlen Motorwelle und der sich durch diese erstreckenden Ausgangswelle des Differentialgetriebes ein Ringkanal gebildet sein, mit einer dem Differentialgetriebe zugewandten ersten Mündung und einer von dem Differentialgetriebe entfernten zweiten Mündung. Die Zwischenplatte der Gehäuseanordnung kann eine Durchtrittsöffnung aufweisen, durch die sich die Ausgangswelle hindurch erstreckt, wobei zwischen der Ausgangswelle und der Zwischenplatte ein Ringspalt gebildet ist, durch den Schmiermittel aus dem Aufnahmeraum des Differentialgetriebes in den Ringkanal fließen kann. Die Zwischenplatte kann eine Schmiermittelleitgeometrie aufweisen, die ausgestaltet ist, um Schmiermittel in einen Mündungsbereich der ersten Mündung des Ringkanals zu leiten, so dass das Schmiermittel durch den Ringkanal zur zweiten Mündung fließen kann.

Die Parksperreneinheit kann insbesondere, wie oben beschrieben, als vormontierbare Baueinheit gestaltet sein, welche bei koaxialer Anordnung des Sperrenrads und der Motorwelle von außen axial auf das Gehäuseteil, in dem die elektrische Maschine aufgenommen ist, aufsetzbar und mit diesem verbindbar ist. Dabei versteht es sich, dass die Parksperreneinheit eine oder mehrere der oben genannten Ausgestaltungen haben kann.

Eine Elektroantriebsanordnung mit einer erfindungsgemäßen Parksperreneinheit bietet analog dieselben Vorteile, wie oben im Zusammenhang mit der Parksperreneinheit beschrieben, worauf abkürzend verwiesen wird. Insbesondere kann die Parksperreneinheit als vormontierte Baueinheit einfach mit dem Elektroantrieb verbunden werden. Hierfür sind zwei definierte Schnittstellen vorgesehen, nämlich die Wellenverbindung und die Gehäuseverbindung, mit denen die beiden Einheiten funktional und körperlich miteinander verbunden werden.

Bevorzugte Ausführungsformen werden nachstehend anhand der Zeichnungsfiguren erläutert. Hierin zeigt:
- Figur 1: eine erfindungsgemäße Parksperreneinheit in perspektivischer Ansicht;
- Figur 2: die Parksperreneinheit gemäß Figur 1 im Längsschnitt;
- Figur 3: die Parksperreneinheit gemäß Figur 1 ohne Gehäuse in perspektivischer Ansicht;
- Figur 4: die Parksperreneinheit gemäß Figur 1 ohne Gehäuse in axialer Ansicht;
- Figur 5: die Parksperreneinheit gemäß Figur 1 ohne Gehäuse im Querschnitt;
- Figur 6: eine erfindungsgemäße Elektroantriebsanordnung mit einer erfindungsgemäßen Parksperreneinheit nach Figur 1 in perspektivischer Ansicht;
- Figur 7: die Elektroantriebsanordnung nach Figur 6 in Axialansicht auf das Differentialgetriebe;
- Figur 8: die Elektroantriebsanordnung nach Figur 6 beziehungsweise 7 im Längsschnitt gemäß Schnittlinie VIII-VIII aus Figur 7;
- Figur 9: eine erfindungsgemäße Parksperreneinheit in einer zweiten Ausführungsform im Längsschnitt;
- Figur 10: schematisch eine erfindungsgemäße Elektroantriebsanordnung in einer zweiten Ausführungsform mit einer Parksperreneinheit nach Figur 9; und
- Figur 11: schematisch eine erfindungsgemäße Elektroantriebsanordnung in einer weiteren Ausführungsform mit einer Parksperreneinheit nach Figur 9.

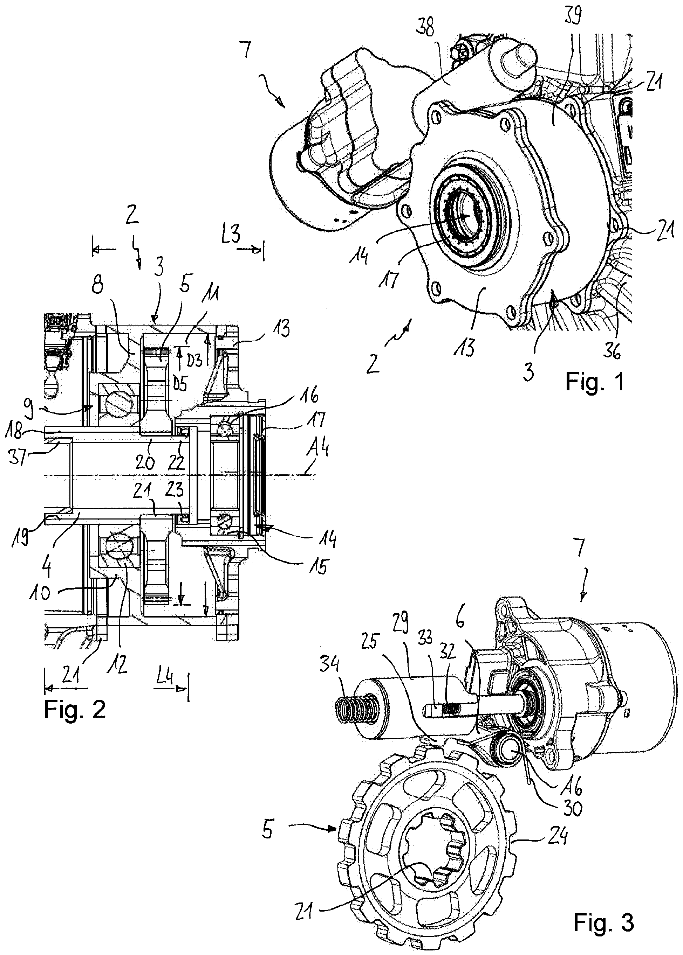

Die Figuren 1 bis 5, welche nachstehend gemeinsam beschrieben werden, zeigen eine erfindungsgemäße Parksperreneinheit 2 für den Antriebsstrang eines Kraftfahrzeugs in einer ersten Ausführungsform. Generell dient eine Parksperre dazu, ein Antriebsbauteil im Antriebsstrang des Kraftfahrzeugs optional zu blockieren, so dass das Kraftfahrzeug an einem unbeabsichtigten Wegrollen gehindert wird, wenn die Antriebsquelle kein Drehmoment zur Verfügung stellt.

Die vorliegende Parksperre ist modular, das heißt als vormontierbare Baueinheit gestaltet, welche an einen Elektroantrieb angeschlossen werden kann. Die Parksperreneinheit 2, die auch als Parksperrenmodul bezeichnet werden kann, umfasst ein Parksperrengehäuse 3, einen hülsenförmigen Wellenansatz 4, der in dem Parksperrengehäuse 3 um eine Drehachse A4 drehbar gelagert ist, ein Sperrenrad 5, das mit dem Wellenansatz 4 drehfest verbunden ist, ein Sperrelement 6, das in dem Parksperrengehäuse 3 bewegbar gelagert ist, und einen steuerbaren Aktuator 7 zum Betätigen des Sperrelements 6.

Das Parksperrengehäuse 3 ist im Wesentlichen topfförmig gestaltet und umfasst einen Bodenabschnitt 8 mit einer Durchgangsöffnung 9. Ein Wandungsbereich des Bodenabschnitts 8, der die Durchgangsöffnung 9 umgibt, bildet eine Lageraufnahme 10 für das Wellenlager 12, in dem der hülsenförmige Wellenansatz 4 drehbar gelagert ist. Das Wellenlager 12 ist vorliegend in Form eines Wälzlagers, insbesondere als Kugellager gestaltet, ohne darauf eingeschränkt zu sein. An dem dem Bodenabschnitt 8 gegenüberliegenden Ende hat das Parksperrengehäuse 3 einen Deckelabschnitt 13, welcher einen Aufnahmeraum 11 der Parksperre, in dem das Sperrenrad 5 aufgenommen ist, axial nach außen begrenzt.

Bei der vorliegenden Ausführungsform ist vorgesehen, dass der Deckelabschnitt 13 eine Durchgangsöffnung 14 aufweist, wobei ein die Durchgangsöffnung umgebender Hülsenabschnitt eine Lageraufnahme 15 für eine Ausgangswelle des Elektroantriebs aufweist. In der Lageraufnahme 15 ist ein Wellenlager 16 für eine Ausgangswelle (nicht dargestellt) des Elektroantriebs angeordnet. Ferner ist insbesondere in den Figuren 1 und 2 ein Wellendichtring 17 erkennbar, welcher den zwischen der Ausgangswelle und dem Deckel 13 gebildeten Ringraum abdichtet. Der Wellendichtring 17 verhindert, dass Schmiermittel aus der Parksperrenanordnung 2 in die Umgebung beziehungsweise ungewünschte Fremdstoffe aus der Umgebung in die Parksperrenanordnung gelangen.

Der Wellenansatz 4 ist in Form einer kurzen Hohlwelle gestaltet und dient als Verbindungsglied, um das Sperrenrad 5 an eine Antriebswelle des Elektroantriebs (hier nicht dargestellt) anzuschließen. Der Wellenansatz 4 erstreckt sich vom Innenraum 11 des Parksperrengehäuses 3 durch den Bodenabschnitt 8 hindurch nach außen. Der Wellenansatz 4 hat insbesondere an einem ersten Ende 18 Verbindungsmittel 19, die derart gestaltet sind, dass sie mit gegengleichen Verbindungsmitteln der Antriebswelle verbunden werden können. Die Verbindungsmittel 19 können beispielsweise in Form einer Wellenverzahnung (Splines) oder anderen geeigneten Formeingriffsmitteln gestaltet sein. An einem in dem Gehäuse 3 liegenden Abschnitt 20 des Wellenansatzes 4 ist das Sperrenrad 5 mittels geeigneter Verbindungselemente 21 angeschlossen. Die Verbindung kann beispielsweise mittels einer formschlüssigen Verbindung, insbesondere einer Verzahnung realisiert werden, wobei andere Verbindungsformen wie eine kraftschlüssige Verbindung, beispielsweise eine Pressverbindung, und/oder eine stoffschlüssige Verbindung, beispielsweise eine Schweißverbindung, sowie eine einteilige Ausgestaltung des Sperrenrads 5 mit dem Wellenansatz 4 ebenfalls denkbar sind. Das in dem Aufnahmeraum 11 liegende beziehungsweise in Richtung Deckel 13 weisende Ende 22 des Wellenansatzes 4 erstreckt sich bis in die Durchgangsöffnung 14 des Deckels 13 axial hinein. Das heißt, das Wellenende 22 hat teilweise eine axiale Überdeckung mit dem Hülsenabschnitt des Deckels 13. Dies ermöglicht, dass innerhalb des Wellenansatzes 4 befindliches Schmiermittel zum Wellenlager 16 gelangen kann, um dieses zu schmieren. Zwischen einer Außenumfangsfläche des Endabschnitts 22 und einer Innenumfangsfläche des Deckelabschnitts ist ein Ringraum gebildet, in dem eine Wellendichtung 23 angeordnet ist.

Wie insbesondere in den Figuren 3 bis 5 erkennbar, weist das Sperrenrad 5 an einer äußeren Umfangsfläche eine Vielzahl von über den Umfang verteilten Rastausnehmungen 24 auf, in die das Sperrelement 6 mit einem Sperrzahn 25 formschlüssig eingreifen kann. Das Sperrelement 6 ist in eine Sperrstellung überführbar, in der es mit dem Sperrenrad 5 formschlüssig verbunden ist, so dass das Sperrenrad 5 an einer Drehbewegung gehindert wird. In der Entriegelungsstellung ist das Sperrelement 6 gegenüber dem Sperrenrad 5 nach außen verschwenkt, so dass das Sperrenrad 5 und damit die Ausgangswelle des Elektroantriebs frei drehbar ist.

Das Sperrelement 6 ist in Form einer Sperrklinke gestaltet, die an einem Ende in dem Parksperrengehäuse 3 um eine Schwenkachse A6 schwenkbar gelagert ist. Die Sperrklinke 6 dient dazu, das Sperrenrad 5 beziehungsweise den damit verbundenen Wellenansatz 4 wahlweise festzusetzen, so dass ein mit dem Wellenansatz zu verbindender Antriebsstrang an der Drehbewegung gehindert wird, oder freizugeben, so dass die Komponenten des Antriebsstranges frei drehen können. Zum Überführen der Sperrklinke 6 von der Sperrstellung in die Freigabestellung ist ein Federelement 30 vorgesehen. Das Federelement 30 ist in Form einer Schenkelfeder gestaltet, welche mit einem ersten Schenkel an dem Parksperrengehäuse 3 abgestützt ist und mit einem zweiten Schenkel an der Sperrklinke 6 abgestützt ist.

An ihrem entgegengesetzten freien Ende weist die Sperrklinke außen eine Funktionsfläche 26 auf, die mit einer Druckfläche 27 eines vom Aktuator 7 betätigbaren Betätigungsglieds 28 zusammenwirkt. Die Funktionsfläche 26 ist gegenüber einer die Drehachse A4 beinhaltenden Radialebene, welche durch den Kontaktpunkt zwischen Funktionsfläche 26 und Druckfläche 27 verläuft, geneigt. Auf diese Weise wird eine translatorische Bewegung des Betätigungsglieds 28 in eine Schwenkbewegung der Sperrklinke 6 umgesetzt. Zur Führung des Betätigungsglieds 28 ist eine Führungshülse 29 vorgesehen, in der das Betätigungsglied 28 axial beweglich geführt ist.

Der Aktuator 7 ist vorliegend in Form eines elektromechanischen Aktuators gestaltet, der von einer elektronischen Steuereinheit (nicht dargestellt) ansteuerbar ist. Es versteht sich jedoch, dass der Aktuator alternativ beispielsweise auch in Form eines elektromagnetischen, hydraulischen oder pneumatischen Aktuators gestaltet sein kann. Der Aktuator 7 wirkt auf das Betätigungsglied 28 in einer ersten axialen Richtung R1 ein. Hierfür hat der Aktuator 7 eine drehend antreibbare Spindelwelle 32, die mit einer hierauf aufgeschraubten Spindelmutter 33 zusammenwirkt. Die Spindelmutter 32 dient als axialer Anschlag beziehungsweise Stützfläche für das Betätigungsglied 28. Das Betätigungsglied 28 ist von einer Feder 34 in die zweite Richtung R2, das heißt gegen die Spindelmutter 32 beaufschlagt.

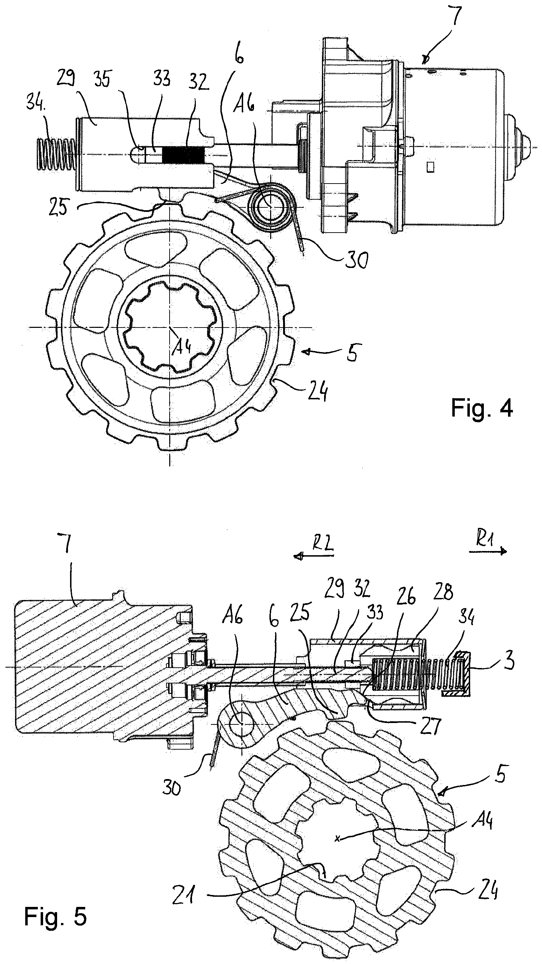

Durch Drehen der Spindelwelle 32 in eine erste Drehrichtung bewegt sich die darauf aufgeschraubte Spindelmutter 33 in die erste axiale Richtung R1 von dem Aktuator 7 weg. In der vom Aktuator entfernten Schiebestellung, wie in Figur 5 dargestellt, ist das Betätigungsglied 28 gegen die Vorspannkraft der Feder 34 von der Funktionsfläche 26 der Sperrklinke 6 weg verschoben, so dass die Sperrklinke 6 freigegeben ist und durch die Federkraft des Federelements 30 gegenüber dem Sperrenrad nach radial außen verschwenkt ist.

Durch Drehen der Spindelwelle 32 in die entgegengesetzte zweite Drehrichtung bewegt sich die Spindelmutter 33 entsprechend in die axial entgegengesetzte zweite Richtung R2, das heißt auf den Aktuator 7 zu. Das Betätigungsglied 28 ist freigegeben und wird von der Feder 34 gegen die Funktionsfläche 26 der Sperrklinke 6 beaufschlagt. Wenn der Zahn 25 sich im Bereich einer Lücke des Sperrenrads befindet, wirkt das Betätigungsglied 28 auf die Sperrklinke 6 im Schließsinn ein und beaufschlagt diese nach radial innen. Der Zahn 25 greift formschlüssig in eine der Ausnehmungen 24 des Sperrenrads 5 ein, so dass letzteres drehgesichert ist. Zum erneuten Lösen wird die Spindelmutter 33 wieder in ihre erste Position bewegt. Damit sich die Spindelmutter 33 beim Drehen der Spindelwelle 32 nicht mitdreht, ist die Spindelmutter 33 in einer Längsnut 35 der Führungshülse 29 verdrehgesichert. Die Feder 32 ist vorzugsweise in Form einer Schraubenfeder gestaltet, die in einem Aufnahmeraum des Betätigungsglieds 28 einsitzt. Die Feder 32 ist einerseits gegen das Betätigungsglied 28 und andererseits gegen das Parksperrengehäuse 3 axial abgestützt ist.

Wie insbesondere in Figur 1 erkennbar, bilden der Aktuator 7 mit Spindelmechanismus 32, 33 sowie der Sperrmechanismus 5, 6 eine gemeinsame Baueinheit mit einem gemeinsamen Gehäuse. Dabei ist insbesondere vorgesehen, dass ein Gehäuseabschnitt 38 des Spindelmechanismus 32, 33, an dem der elektromotorische Aktuator angeflanscht ist, mit einem Gehäuseabschnitt 39 des Sperrmechanismus 5, 6 fest verbunden ist.

Die Parksperreneinheit 2 kann ferner einen Sperrsensor aufweisen, der die Schaltstellung des Sperrglieds 6 erfasst und ein entsprechendes Sperrsignal an die elektronische Steuereinheit weitergibt. Der Sperrsensor, der in dem Parksperrengehäuse 3 befestigt werden kann, erkennt, ob das Sperrelement 6 in das Sperrenrad 5 formschlüssig eingreift, sich ein einer Zahn-auf-Zahn-Stellung befindet, oder vollständig von dem Sperrenrad 5 weggeschwenkt ist.

Zum Verbinden mit einem Elektroantrieb hat die Parksperreneinheit 2 zwei Schnittstellen, nämlich die Verbindungselemente 21 zum Anschließen des Parksperrengehäuses 3 an das Gehäuse 36 des Elektroantriebs sowie das Verbindungsprofil 19 des Wellenansatzes 4 zum drehfesten Verbinden des Sperrenrads 5 mit einer Antriebswelle 37 des Elektroantriebs. Das Anschließen des Parksperrengehäuses 3 mit dem Gehäuse des Elektroantriebs erfolgt vorliegend mittels Flansch- beziehungsweise Schraubverbindungen, ohne darauf eingeschränkt zu sein.

Es ist insbesondere in Figur 2 erkennbar, dass ein Innendurchmesser D3 des Parksperrengehäuses 3 im Bereich des Sperrenrads 5, das heißt insbesondere in axialer Überdeckung mit dem Sperrenrad 5, im Wesentlichen dem Außendurchmesser D5 des Sperrenrads 5 entspricht, das heißt nur geringfügig größer ist als besagter Außendurchmesser D5. Insbesondere ist dabei vorgesehen, dass der den Aufnahmeraum 11 für das Sperrenrad 5 bildende beziehungsweise diesen einschließende Gehäuseabschnitt des Parksperrengehäuses 3 einen Innendurchmesser D3 aufweist, der kleiner ist als das 1,3-fache, vorzugsweise kleiner als das 1 ,2-fache des Außendurchmessers D5 des Sperrenrads 5 ist. Das Parksperrengehäuse 3 kann ferner eine axiale Länge L3 aufweisen, die kleiner ist als das 1,5-fache der axialen Länge L4 des Wellenansatzes 4 beträgt. Insgesamt ergeben sich durch diese Ausgestaltung der Parksperreneinheit ein kompakter Aufbau und eine variable Einsetzbarkeit.

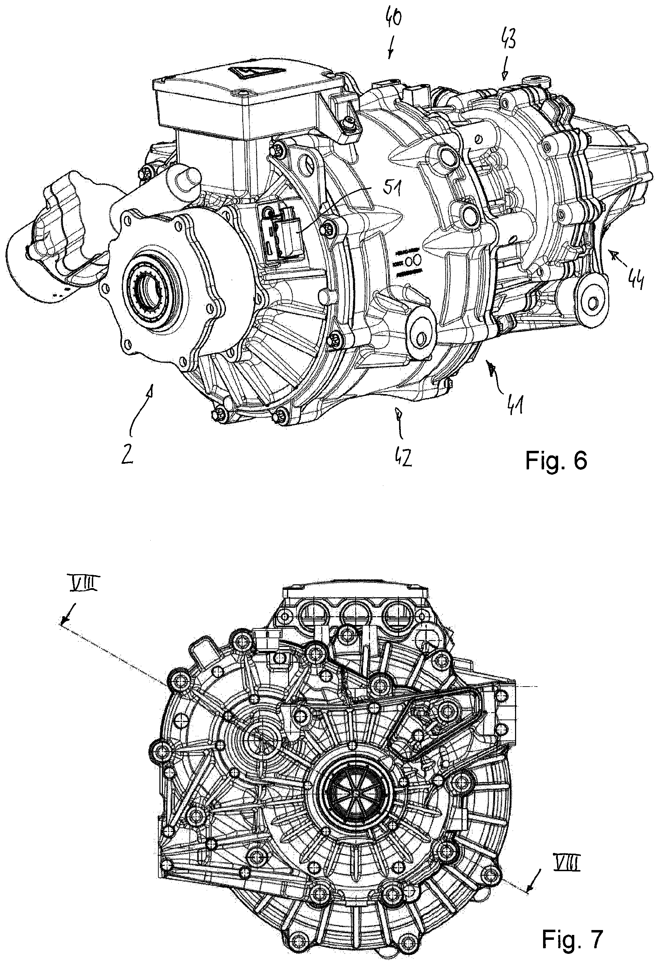

Die Figuren 6 bis 8, welche nachstehend gemeinsam beschrieben werden, zeigen einen Elektroantrieb mit einer erfindungsgemäßen Parksperreneinheit 2 nach den Figuren 1 bis 5. Gemeinsam werden der Elektroantrieb 41 und die Parksperreneinheit 2 auch als Elektroantriebsanordnung 40 bezeichnet.

Der Elektroantrieb 41 umfasst eine elektrische Maschine 42 und eine mit der elektrischen Maschine zur Übertragung eines Drehmoments antriebsverbundenes Untersetzungsgetriebe 43 sowie ein mit dem Untersetzungsgetriebe zur Übertragung eines Drehmoments antriebverbundenes Differentialgetriebe 44.

Der Elektroantrieb 41 ist ausgestaltet, um eine Antriebsachse eines Kraftfahrzeugs als alleiniger Antrieb dieser Antriebsachse anzutreiben. Eine weitere Antriebsachse des Kraftfahrzeugs kann von einer weiteren Antriebseinheit mit separater Antriebsquelle, beispielsweise einem Verbrennungsmotor angetrieben werden.

Die elektrische Maschine 42 umfasst einen Stator und einen hierzu drehbaren Rotor, der bei Bestromen der elektrischen Maschine eine Motorwelle 37 drehend antreibt. Die Drehbewegung der Motorwelle 37 wird über das im Leistungspfad nachgelagerte Untersetzungsgetriebe 43 auf das Differentialgetriebe 44 übertragen. Die elektrische Maschine 42 wird von einer Batterie (nicht dargestellt) mit elektrischem Strom versorgt. Die elektrische Maschine 42 kann im Motorbetrieb arbeiten, wobei elektrische Energie in mechanische Energie zum Antrieben der Antriebsachse umgewandelt wird, oder im Generatorbetrieb, wobei, umgekehrt, mechanische Energie in elektrische Energie umgewandelt wird, die dann in der Batterie gespeichert werden kann. Der Elektroantrieb 40 umfasst ferner eine Gehäuseanordnung 36, in dem die elektrische Maschine 42, das Untersetzungsgetriebe 43 und das Differentialgetriebe 44 angeordnet sind.

Das Untersetzungsgetriebe 43 ist ausgestaltet, um eine von der Motorwelle 37 eingeleitete Drehbewegung vom Schnellen ins Langsame zu übersetzen. Somit dreht ein Eingangsteil des Differentialgetriebes 44 um ein Vielfaches langsamer als die Motorwelle 37 der elektrischen Maschine 42. Das Differentialgetriebe 44 teilt das eingeleitete Drehmoment auf zwei Ausgangswellen (nicht dargestellt) auf, die zum Antreiben eines zugehörigen Fahrzeugrads dienen. Die Motorwelle 37 ist als Hohlwelle gestaltet und mittels erster und zweiter Lager 45, 46 in der Gehäuseanordnung 36 des Elektroantriebs 40 um eine Drehachse A37 drehbar gelagert. Ein Antriebsrad 47 (erstes Zahnrad) ist drehfest mit der Antriebswelle 37 verbunden, insbesondere einteilig mit dieser gestaltet.

Das Untersetzungsgetriebe 4 umfasst eine Getriebewelle 48, die über Lager 49, 50 um eine zur ersten Drehachse A37 parallele zweite Drehachse A48 in der Gehäuseanordnung 36 drehbar gelagert ist und auch als Zwischenwelle bezeichnet werden kann. Die Getriebewelle 48 umfasst ein Antriebsrad 52 (zweites Zahnrad) und ein Abtriebsrad 53 (drittes Zahnrad), die drehfest mit der Getriebewelle verbunden sind, insbesondere einteilig mit dieser ausgestaltet sind. Das Abtriebsrad 53 kämmt mit einem Ringrad 54 (viertes Zahnrad) zum Antreiben des Differentialgetriebes 44. Das Ringrad 54 ist fest mit dem Eingangsteil 55 des Differentialgetriebes 44 verbunden und kann beispielsweise einteilig mit diesem ausgestaltet sein, wobei andere Verbindungen wie eine stoffschlüssige Verbindung mittels Schweißen und/oder eine kraftschlüssige Verbindung mittels Schrauben ebenfalls möglich sind. Es ist insbesondere vorgesehen, dass das Abtriebsrad 53 der Getriebewelle 48 und das Ringrad 54 des Kupplungseingangsteils Schrägverzahnungen aufweisen.

Es ist erkennbar, dass das Untersetzungsgetriebe 4 genau eine Getriebewelle 48 und zwei Zahnradpaarungen aufweist. Das Antriebsrad 47 der Motorwelle 37 und das hiermit kämmende Antriebsrad 52 der Getriebewelle 48 bilden eine erste Zahnradpaarung des Übersetzungsgetriebes 5 mit einem ersten Übersetzungsverhältnis i1. Das Abtriebsrad 53 der Getriebewelle 48 und das hiermit kämmende Ringrad 54 bilden eine zweite Zahnradpaarung mit einem zweiten Übersetzungsverhältnis i2. Das Motorwellen-Antriebsrad 47 hat einen wesentlich kleineren Durchmesser beziehungsweise eine geringere Zähnezahl als der Durchmesser beziehungsweise die Zähnezahl des Getriebewellen-Antriebsrads 52. Auf diese Weise wird eine Übersetzung ins Langsame erzeugt. Ebenso hat das Getriebewellen-Abtriebsrad 53 einen kleineren Durchmesser beziehungsweise eine geringere Zähnezahl als das Ringrad 54, so dass hier eine weitere Übersetzung ins Langsame erfolgt.

Konstruktiv ist die Getriebewelle 48 radial verhältnismäßig nah an der Motorwelle 37 angeordnet. Dabei ist insbesondere vorgesehen, dass der zwischen der Drehachse A48 der Getriebewelle 48 und der Drehachse A37 der Motorwelle 37 gebildete radiale Abstand, kleiner ist als das 0,9-fache des größten Radius der elektrischen Maschine 42, insbesondere kleiner als das 0,8-fache des Radius. Mit dieser Ausgestaltung liegt die Getriebewelle 48 (ohne Antriebsrad 18), in Axialansicht, deutlich innerhalb einer Einhüllenden der elektrischen Maschine, so dass insgesamt ein radial kompakter Aufbau des Elektroantriebs erreicht wird.

Das Differentialgetriebe 44 umfasst einen Differentialkorb 55, der fest mit dem Ringrad 54 verbunden und von dem Abtriebsrad 53 um die Drehachse A55 drehend antreibbar ist, und einen Differentialrädersatz 56, der in dem Differentialkorb 55 aufgenommen ist. Der Differentialkorb 55 ist mittels Lager 57, 58 um die Drehachse A37 in der Gehäuseanordnung 36 drehbar gelagert. Der Differentialkorb 55 kann zweiteilig gestaltet sein und ein erstes Gehäuseteil umfassen, das einteilig mit dem Ringrad 54 gestaltet ist, und ein zweites Gehäuseteil, die fest miteinander verbunden sind. Die beiden Gehäuseteile haben jeweils einen Hülsenansatz, mit dem sie in dem jeweils zugehörigen Lager 57, 58 drehbar aufgenommen sind. Der Differentialkorb 55 und die Motorwelle 37 sind koaxial zueinander angeordnet, das heißt sie haben dieselbe Drehachse A.

Im Differentialkorb 55, der als Eingangsteil dient, sind mehrere Differentialräder 59 aufgenommen, die auf mit dem Differentialkorb 55 verbundenen Zapfen drehbar gelagert sind und gemeinsam mit diesem um die Drehachse A rotieren, sowie ein erstes und ein zweites Seitenwellenrad 60, 61 als Ausgangsteile, die von den Differentialrädern 59 um die Drehachse A drehend antreibbar sind. Das erste Seitenwellenrad 60 ist mit einer ersten Ausgangswelle (nicht dargestellt) drehfest zu verbinden, die sich durch die als Hohlwelle ausgebildete Motorwelle 37 hindurchgesteckt. Die Ausgangswelle wird an einem getriebeseitigen ersten Abschnitt mittels eines Lagers 62 in dem Hülsenansatz des Differentialkorbs 55 drehbar gelagert, und an einem parksperrenseitigen zweiten Abschnitt mittels des Lagers 16 in dem Deckelabschnitt 13 des Parksperrengehäuses 3 um die Drehachse A drehbar gelagert. An dem parksperrenseitigen Endabschnitt kann die Ausgangswelle mit einem Gleichlaufgelenk verbunden werden, das zur Drehmomentübertragung auf eine Seitenwelle des Kraftfahrzeugs unter Winkelbewegung dient. Das zweite Seitenwellenrad 61 hat, wie das erste Seitenwellenrad 60, eine Wellenverzahnung, in die ein Wellenzapfen einer zweiten Ausgangswelle zum Antreiben einer zweiten Seitenwelle des Kraftfahrzeus drehfest eingesteckt werden kann.

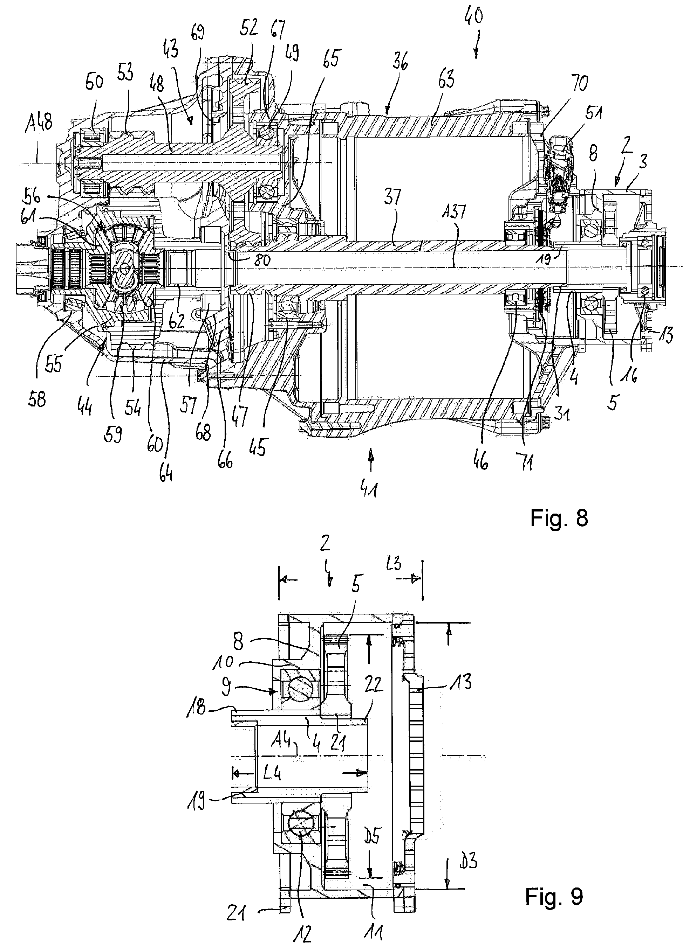

Es ist insbesondere in Figur 8 erkennbar, dass die Gehäuseanordnung 36 aus mehreren einzelnen Gehäuseteilen zusammengesetzt ist. Insbesondere umfasst die Gehäuseanordnung 36 einen ersten Gehäuseabschnitt 63, in dem der Elektromotor 42 aufgenommen ist, und einen zweiten Gehäuseabschnitt 64, in dem das Differentialgetriebe 44 aufgenommen ist, sowie eine erste Zwischenwand 65 und eine zweite Zwischenwand 66, die zwischen dem ersten und zweiten Gehäuseabschnitt 63, 64 angeordnet und mit diesen fest verbunden sind. Die erste Zwischenwand 65 weist einen ersten Lageraufnahmeabschnitt auf, in dem die Motorwelle 37 mittels des Lagers 45 um die Drehachse A drehbar gelagert ist, sowie einen zweiten Lageraufnahmeabschnitt 67, in dem die Getriebewelle 48 mittels des Lagers 49 um die Drehachse A48 drehbar gelagert ist. Für eine radial kompakte Bauweise kann vorgesehen sein, dass ein radialer Abstand zwischen der ersten Lageraufnahmefläche und der zweiten Lageraufnahmefläche kleiner als das 2,0-fache der radialen Erstreckung des ersten beziehungsweise zweiten Wellenlagers 45, 49 ist.

Axial zwischen der ersten Zwischenwand 65 und der zweiten Zwischenwand 66 ist ein Aufnahmeraum gebildet, in dem die Antriebsräder 47, 52 aufgenommen sind. Die zweite Zwischenwand 66, die insbesondere schmaler als die erste Zwischenwand 65 ist und insofern auch als Zwischenplatte bezeichnet werden kann, hat einen Lageraufnahmeabschnitt 68 für das Lager 57 zur drehbaren Lagerung des Differentialkorbs 55, sowie eine Durchgangsöffnung 69, durch welche die Getriebewelle 48 hindurchgeführt ist. Die Durchgangsöffnung 69 hat einen größeren Innendurchmesser als der Außendurchmesser des Zahnrads 53, so dass die Getriebewelle 48 mit Zahnrad 53 durch die Öffnung 69 montiert werden kann.

An dem von der Getriebeeinheit 4 entfernt liegenden Ende, das heißt dem motorseitigen Ende, hat die Gehäuseanordnung 36 ein Bodenteil 70 in dem das Lager 46 für die Motorwelle 37 aufgenommen ist. Die Motorwelle 37 erstreckt sich durch das Bodenteil 70 hindurch und hat an seinem der Parksperre zugewandten Ende ein Verbindungsprofil 31, das gegengleich zum Verbindungsprofil 19 des Wellenansatzes 4 ausgebildet ist, so dass der Wellenansatz 4 drehfest an die Motorwelle 37 angeschlossen werden kann. In einem zwischen dem Bodenabschnitt 70 des ersten Gehäuseteils 36 und dem Bodenabschnitt der Parksperrenanordnung 3 gebildeten ringförmigen Aufnahmeraum ist ein Drehimpulsgeber 71 zum Sensieren einer Drehstellung der elektrischen Maschine 4 aufgenommen. Vom Drehimpulsgeber 71 ist ferner der elektrische Anschluss 51 erkennbar.

Eine Besonderheit der vorliegenden Ausgestaltung ist, dass das Differentialgetriebe 55 und die Parksperreneinheit 3 auf entgegengesetzten Seiten des Elektromotors 4 angeordnet sind. Hieraus ergibt sich in vorteilhafter Weise, dass der Anpassungsaufwand an einen bestehenden Elektroantrieb, der keine Parksperre aufweist, nur gering ist. Insbesondere kann der Antriebsstrang zwischen der Motorwelle 37 und dem Differentialgetriebe 44 konstruktiv gleich bleiben.

Bei Anwendungen, in denen eine Parksperre erforderlich ist, kann dieser als Baueinheit an den Elektroantrieb angeflanscht werden. Hierfür wird die Parksperreneinheit 2 bei koaxialer Anordnung des Sperrenrads 5 und der Motorwelle 37 axial auf das Bodenteil 70 des Elektroantriebs aufgesetzt und mittels einer Schraub- beziehungsweise Flanschverbindung fest an dieses angeschlossen. Dabei wird zwischen der Motorwelle 37 und dem Wellenansatz 4 eine drehfeste Verbindung hergestellt, so dass das Parksperrenrad 5 an die Motorwelle 37 angeschlossen ist und gemeinsam mit dieser dreht, beziehungsweise diese blockiert, wenn die Parksperre 2 in der Schließstellung ist.

Bei der vorliegenden Ausführungsform ist die Parksperreneinheit 2 in koaxialer Anordnung zur Motorwelle 37 des Elektroantriebs41 angeordnet. Es sind jedoch auch andere Ausführungsformen möglich, bei denen eine Parksperreneinheit 2 an einer anderen Antriebswelle des Elektroantriebs angeordnet werden kann.

In Figur 9 ist eine erfindungsgemäße Parksperreneinheit 2 in einer gegenüber der Ausführungsform nach Figur 1 bis 5 leicht abgewandelter Form im Längsschnitt gezeigt. Die Funktionsweise und der mechanische Aufbau der Parksperre ist identisch mit dem in den Figuren 3 bis 5 gezeigten Aufbau, und ist daher nicht noch einmal gesondert wiedergegeben. Die Ausführung nach Figur 9 entspricht weitestgehend derjenigen nach Figur 1 bis 5, weswegen hinsichtlich der Gemeinsamkeiten auf die obige Beschreibung Bezug genommen wird. Dabei sind gleiche Einzelheiten mit gleichen Bezugszeichen versehen wie in den Figuren 1 bis 5. Der einzige Unterschied der Ausführung gemäß Figur 9 besteht darin, dass der Deckelabschnitt 13 als geschlossener Deckel gestaltet ist, das heißt ohne Durchgangsöffnung.

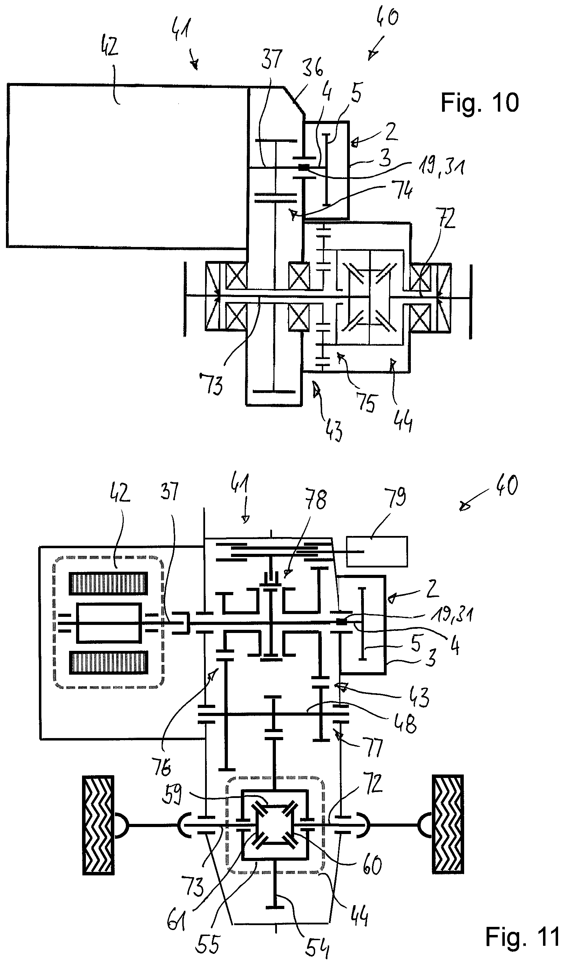

In Figur 10 ist ein Elektroantrieb in einer weiteren Ausführungsform schematisch gezeigt, die hinsichtlich der Funktionsweise ähnlich ist wie die Ausführungsform gemäß Figur 8. Einander entsprechende oder ähnliche Einzelheiten sind daher mit denselben Bezugszeichen versehen wie in Figur 8.

Der Elektroantrieb 41 umfasst einen Elektromotor 42, eine Getriebeeinheit mit einem Untersetzungsgetriebe 43 und einem Differentialgetriebe 44, das ein Antriebsmoment vom Elektromotor 42 auf zwei Ausganswellen 72, 73 überträgt. Das Untersetzungsgetriebe umfasst zwei Untersetzungsstufen, wobei eine erste durch ein Stirnradeinheit 74 und eine zweite durch eine Planetenradeinheit 75 gebildet sein kann.

Es ist eine Parksperreneinheit 2 vorgesehen, die hinsichtlich Aufbau und Funktionsweise derjenigen gemäß Figur 9 entspricht, so dass diesbezüglich abkürzend auf die obige Beschreibung Bezug genommen wird. Die Parksperreneinheit 2 ist, genau wie der Elektroantrieb 41 nur schematisch dargestellt. Die Parksperreneinheit 2 ist in koaxialer Anordnung zur Motorwelle 37 des Elektromotors 42 mit dem Gehäuse 36 des Elektroantriebs 41 verbunden. Die mechanische Verbindung der Gehäuseteile kann beispielsweise mittels einer Flansch- beziehungsweise Schraubverbindung realisiert werden. Die drehfeste Verbindung 19, 31zwischen dem Wellenansatz 4 der Parksperreneinheit 3 und der Motorwelle 37 kann mittels einer Wellenverzahnung erfolgen.

In Figur 11 ist ein Elektroantrieb in einer weiteren Ausführungsform gezeigt, die hinsichtlich der Funktionsweise in weiten Teilen ähnlich ist wie die Ausführungsform gemäß Figur 10. Einander entsprechende oder ähnliche Einzelheiten sind daher mit denselben Bezugszeichen versehen wie in Figur 10 beziehungsweise in den Figuren 8 und 9.

Der Elektroantrieb 41 umfasst einen Elektromotor 42, eine Getriebeeinheit mit einem Untersetzungsgetriebe 43, das eine vom Elektromotor 42 eingeleitete Drehbewegung vom Schnellen ins Langsame übersetzt, und einem Differentialgetriebe 44, das ein Antriebsmoment vom Elektromotor 42 auf zwei Ausgangswellen 72, 73 überträgt. Das Untersetzungsgetriebe ist vorliegend als Schaltgetriebe mit zwei Schaltstufen 76, 77 ausgestaltet, so dass sich ein vom Elektromotor 42 eingeleitete Drehbewegung mit zwei unterschiedlichen Drehzahlen auf das Differentialgetriebe 44 übertragen werden können. Zum wahlweisen Schalten des Schaltgetriebes in die erste Schaltstufe 76 beziehungsweise zweite Schaltstufe 77 ist eine Kupplungseinheit 78 vorgesehen, die von einem steuerbaren Kupplungsaktuator 79 betätigbar ist.

Es ist eine Parksperreneinheit 2 vorgesehen, die hinsichtlich Aufbau und Funktionsweise derjenigen gemäß Figur 9 entspricht, so dass diesbezüglich abkürzend auf die obige Beschreibung Bezug genommen wird. Die Parksperreneinheit 3 ist wie der Elektroantrieb 41 nur schematisch dargestellt. Die Parksperreneinheit 3 ist in koaxialer Anordnung zur Motorwelle 36 des Elektromotors 42 mit dem Gehäuse 37 des Elektroantriebs 41 verbunden. Die mechanische Verbindung der Gehäuseteile kann beispielsweise mittels einer Flansch- beziehungsweise Schraubverbindung realisiert werden. Die drehfeste Verbindung zwischen dem Wellenansatz 4 der Parksperreneinheit 3 und der Motorwelle 37 kann mittels einer Wellenverzahnung erfolgen.

### Bezugszeichenliste

- 2: Parksperrenanordnung
- 3: Parksperrengehäuse
- 4: Wellenansatz
- 5: Sperrenrad
- 6: Sperrelement
- 7: Aktuator
- 8: Bodenabschnitt
- 9: Durchgangsöffnung
- 10: Lageraufnahme
- 11: Aufnahmeraum
- 12: Wellenlager
- 13: Deckelabschnitt
- 14: Durchgangsöffnung
- 15: Lageraufnahme
- 16: Wellenlager
- 17: Wellendichtring
- 18: Ende
- 19: Verbindungsmittel
- 20: Abschnitt
- 21: Verbindungselemente
- 22: Ende
- 23: Wellendichtung
- 24: Rastausnehmungen
- 25: Sperrzahn
- 26: Funktionsfläche
- 27: Druckfläche
- 28: Betätigungsglieds
- 29: Führungshülse
- 30: Federelement
- 31: Verbindungsprofil
- 32: Spindelwelle
- 33: Spindelmutter
- 34: Feder
- 35: Längsnut
- 36: Gehäuse
- 37: Antriebswelle
- 38: Gehäuseabschnitt
- 39: Gehäuseabschnitt
- 40: Elektroantriebsanordnung
- 41: Elektroantrieb
- 42: elektrische Maschine
- 43: Untersetzungsgetriebe
- 44: Differentialgetriebe
- 45: Lager
- 46: Lager
- 47: Antriebsrad
- 48: Getriebewelle
- 49: Lager
- 50: Lager
- 51: elektrischer Anschluss
- 52: Antriebsrad
- 53: Abtriebsrad
- 54: Ringrad
- 55: Differentialkorb
- 56: Differentialrädersatz
- 57: Lager
- 58: Lager
- 59: Differentialrad
- 60: Seitenwellenrad
- 61: Seitenwellenrad
- 62: Lager
- 63: Gehäuseabschnitt
- 64: Gehäuseabschnitt
- 65: Zwischenwand
- 66: Zwischenwand
- 67: Lageraufnahmeabschnitt
- 68: Lageraufnahmeabschnitt
- 69: Durchgangsöffnung
- 70: Boden
- 71: Drehimpulsgeber
- 72: Ausgangswelle
- 73: Ausgangswelle
- 74: Stirnradeinheit
- 75: Planetenradeinheit
- 76: Schaltstufe
- 77: Schaltstufe
- 78: Kupplungseinheit
- 79: Aktuator
- 80: Durchgangsöffnung

- A: Achse
- D: Durchmesser
- L: Länge
- R: Richtung

## Patentansprüche

1. Parksperreneinheit für eine Elektroantriebsanordnung zum Antreiben eines Kraftfahrzeugs, umfassend:
ein Parksperrengehäuse (3), das einen Bodenabschnitt (8) mit einer Lageraufnahme (10) sowie an einem bodenseitigen Ende Verbindungselemente (21) zum Verbinden des Parksperrengehäuses (3) mit einem Gehäuse (36) der Elektroantriebsanordnung (40) aufweist;
einen hülsenförmigen Wellenansatz (4), der in der ersten Lageraufnahme (10) um eine Drehachse (A4) drehbar gelagert ist, wobei der Wellenansatz (4) ein Verbindungsprofil (19) zum drehfesten Verbinden mit einer Antriebswelle (37) der Elektroantriebsanordnung (40) aufweist;
ein Sperrenrad (5), das mit dem Wellenansatz (4) drehfest verbunden ist und in einem Aufnahmeraum (11) zwischen dem Bodenabschnitt (8) und dem Deckelabschnitt (13) aufgenommen ist;
ein Sperrelement (6), das in dem Parksperrengehäuse (3) bewegbar gelagert ist und in eine Schließposition überführbar ist, in der das Sperrelement (6) eine Drehbewegung des Sperrenrads (5) blockiert, und in eine Freigabeposition, in der das Sperrelement (6) das Sperrenrad (5) freigibt, so dass das Sperrenrad (5) und die damit verbundene Antriebswelle (37) frei drehbar sind;
einen steuerbaren Aktuator (7), der mit dem Parksperrengehäuse (3) verbunden ist und ausgestaltet ist, um das Sperrelement (6) wahlweise in die Schließposition oder die Freigabeposition zu überführen;
wobei ein kleinster Innendurchmesser (D3) des Parksperrengehäuses (3) im Bereich des Sperrenrads (5) im Wesentlichen einem größten Außendurchmesser (D5) des Sperrenrads (5) entspricht.

2. Parksperreneinheit nach Anspruch 1,
**dadurch gekennzeichnet,**
**dass** der kleinste Innendurchmesser (D3) des Parksperrengehäuses (3) im Bereich des Sperrenrads (5) größer ist als der größte Außendurchmesser (D5) des Sperrenrads (5) und kleiner ist als das 1,3-fache des größten Außendurchmessers (D5) des Sperrenrads (5).

3. Parksperreneinheit nach Anspruch 1 oder 2,
**dadurch gekennzeichnet,**
**dass** das Parksperrengehäuse (3) eine axiale Länge (L3) aufweist, die kleiner ist als das 1,5-fache der axialen Länge (L4) des Wellenansatzes (4).

4. Parksperreneinheit nach einem der Ansprüche 1 bis 3,
**dadurch gekennzeichnet,**
**dass** der Wellenansatz (4) zur Momenteneinleitung ausschließlich das Verbindungsprofil (19) zum drehfesten Verbinden mit der Ausgangswelle (37) der Elektroantriebsanordnung (40) sowie die Verbindung (21) mit dem Sperrenrad (5) aufweist.

5. Parksperreneinheit nach einem der Ansprüche 1 bis 4,
**dadurch gekennzeichnet,**
**dass** das Parksperrengehäuse (3) einen Deckelabschnitt (13) mit einer Durchgangsöffnung (14) mit einer zweiten Lageraufnahme (15) aufweist, wobei sich ein deckelseitiges Ende des Wellenansatzes (4) bis in die Durchgangsöffnung (14) axial hineinerstreckt.

6. Parksperreneinheit nach einem der Ansprüche 1 bis 5,
**dadurch gekennzeichnet,**
**dass** ein axial bewegbares Betätigungsglied (28) vorgesehen ist, das vom Aktuator (7) in eine erste axiale Richtung (R1) bewegbar ist und von Federmitteln (34) in eine zur ersten Richtung entgegengesetzte zweite Richtung (R2) beaufschlagt wird,
wobei das Betätigungsglied (28) mit dem Sperrelement (6) derart zusammenwirkt, dass das Betätigungsglied (28) bei Bewegen in die erste axiale Richtung das Sperrelement (6) freigibt und bei Bewegen in die zweite axiale Richtung das Sperrelement (6) in die Schließstellung beaufschlagt.

7. Elektroantriebsanordnung zum Antreiben eines Kraftfahrzeugs, umfassend:
eine Gehäuseanordnung (36);
eine elektrische Maschine (42) mit einer als Hohlwelle ausgebildeten Motorwelle (37), die um eine Drehachse (A37) drehbar antreibbar ist;
ein Untersetzungsgetriebe (43), das ausgestaltet ist, um ein von der Motorwelle (37) eingeleitetes Drehmoment ins Langsame zu übersetzen, wobei das Untersetzungsgetriebe eine Getriebewelle (48) aufweist, die zur Motorwelle (37) versetzt angeordnet ist;
ein Differentialgetriebe (44) mit einem Differentialkorb (55) und zwei Ausgangsrädern (60, 61), wobei das Differentialgetriebe (44) ausgestaltet ist, um eine vom Untersetzungsgetriebe auf den Differentialkorb (55) eingeleitete Drehbewegung auf die zwei Ausgangsräder (60, 61) zu übertragen;
eine Parksperreneinheit (2) mit einem Sperrenrad (5), einem Sperrelement (6) und einem steuerbaren Aktuator (7), wobei das Sperrenrad (5) koaxial zur Drehachse (A37) angeordnet und mit der Motorwelle (37) drehfest verbunden ist, wobei das Sperrelement (6) mit dem Sperrenrad (5) zusammenwirkt und vom Aktuator (7) im Schließsinn ansteuerbar ist, um eine Drehbewegung des Sperrenrads (5) zu hemmen, und im Öffnungssinn ansteuerbar ist, um das Sperrenrad (5) freizugeben;
wobei das Differentialgetriebe (44) und die Parksperreneinheit (2) auf entgegengesetzten Seiten der elektrischen Maschine (42) angeordnet sind;
wobei ein erstes Gehäuseteil (63) der Gehäuseanordnung (36) an einem zum Differentialgetriebe (44) entgegengesetzten Ende einen Bodenabschnitt (70) mit einer Durchgangsöffnung (69) aufweist, wobei die Motorwelle (37) sich durch die Durchgangsöffnung (69) hindurch erstreckt;
wobei die Parksperrenanordnung (2) ein Parksperrengehäuse (3) mit einem Verbindungsabschnitt (21) aufweist,
wobei die Parksperrenanordnung (2) von außen auf den Bodenabschnitt (70) aufgesetzt und der Verbindungsabschnitt (21) des Parksperrengehäuses (3) mit dem Bodenabschnitt (70) der Gehäuseanordnung (36) verbunden ist; und
wobei der Wellenansatz (4) der Parksperreneinheit (2) mit der Motorwelle (37) der elektrischen Maschine (42) drehfest verbunden ist.

8. Elektroantriebsanordnung nach Anspruch 7,
**dadurch gekennzeichnet,**
**dass** der Wellenansatz (4) der Parksperreneinheit (2) über eine formschlüssige Steckverbindung mit der Motorwelle (37) der elektrischen Maschine (42) drehfest verbunden ist.

9. Elektroantriebsanordnung nach einem der Ansprüche 7 oder 8,
**dadurch gekennzeichnet,**
**dass** das Parksperrengehäuse (3) einen Deckelabschnitt (13) mit einer zentralen Durchgangsöffnung (14) aufweist, wobei im Deckelabschnitt ein Wellenlager (16) zur drehbaren Lagerung einer mit dem Differentialgetriebe (44) verbundenen Ausgangswelle vorgesehen ist,
wobei sich die Motorwelle (37) beziehungsweise der hiermit verbundene Wellenansatz (4) axial bis in den Deckelabschnitt (13) des Parksperrengehäuses (2) hineinerstreckt.

10. Elektroantriebsanordnung nach einem der Ansprüche 7 bis 9,
**dadurch gekennzeichnet,**
**dass** ein Drehimpulsgeber (71) zum Sensieren einer Drehstellung der elektrischen Maschine (42) vorgesehen ist, wobei der Drehimpulsgeber (71) in einem zwischen dem Bodenabschnitt (70) des ersten Gehäuseteils (63) und dem Bodenabschnitt (8) der Parksperrenanordnung (2) gebildeten ringförmigen Aufnahmeraum angeordnet ist.

11. Elektroantriebsanordnung nach einem der Ansprüche 7 bis 10,
**dadurch gekennzeichnet,**
**dass** die Gehäuseanordnung (36) ein zweites Gehäuseteil (64) aufweist, in dem das Differentialgetriebe (44) angeordnet ist, sowie eine Zwischenwand (65), die zwischen dem ersten Gehäuseteil (63) und dem zweiten Gehäuseteil (64) angeordnet ist,
wobei die Zwischenwand (65) eine erste Lageraufnahme zur Aufnahme eines ersten Wellenlagers für die Motorwelle (37) sowie eine zweite Lageraufnahme zur Aufnahme eines zweiten Wellenlagers für die Getriebewelle (48) aufweist, wobei die Motorwelle (37) einen mit einem Rotor der elektrischen Maschine (42) verbundenen Wellenabschnitt, einen in der Zwischenwand (65) drehbar gelagerten Lagerabschnitt und ein Antriebsrad (47) aufweist, wobei das Antriebsrad (47) in einen hinter der Zwischenwand (65) gebildeten Aufnahmeraum frei hineinragt.

12. Elektroantriebsanordnung nach einem der Ansprüche 7 bis 11,
**dadurch gekennzeichnet,**
**dass** eine Zwischenplatte (66) vorgesehen ist, die zwischen der Zwischenwand (65) und dem zweiten Gehäuseabschnitt (64) angeordnet ist, und
**dass** zwischen Motorwelle (37) und der sich durch die Motorwelle (37) erstreckenden Ausgangswelle ein Ringkanal gebildet ist, mit einer dem Differentialgetriebe (44) zugewandten ersten Mündung und einer von dem Differentialgetriebe (44) entfernten zweiten Mündung;
wobei die Zwischenplatte (66) der Gehäuseanordnung (36) eine Durchtrittsöffnung (80) aufweist, durch die sich die Ausgangswelle hindurch erstreckt, wobei zwischen der Ausgangswelle und der Zwischenplatte (66) ein Ringspalt gebildet ist, durch den Schmiermittel aus einem Getrieberaum, in dem das Differentialgetriebe (44) aufgenommen ist, in den Ringkanal fließen kann.

13. Elektroantriebsanordnung nach Anspruch 12,
**dadurch gekennzeichnet,**
**dass** die Zwischenplatte (66) eine Schmiermittelleitgeometrie aufweist, die ausgestaltet ist, um Schmiermittel in einen Mündungsbereich der ersten Mündung des Ringkanals zu leiten, so dass das Schmiermittel durch den Ringkanal zu der zweiten Mündung fließen kann.

14. Elektroantriebsanordnung nach einem der Ansprüche 7 bis 13,
**dadurch gekennzeichnet,**
**dass** die Parksperreneinheit (2) als vormontierbare Baueinheit nach einem der Ansprüche 1 bis 6 gestaltet ist, welche bei koaxialer Anordnung des Sperrenrads (5) und der Motorwelle (37) von außen axial auf ein Bodenteil (70) des Gehäuseabschnitts (63), in dem die elektrische Maschine (42) aufgenommen ist, aufsetzbar und mit diesem verbindbar ist.

## Claims

1. A parking lock unit for an electric drive assembly for driving a motor vehicle, comprising:
a parking lock housing (3) comprising a base portion (8) with a bearing receptacle (10) and, at a base end, connecting elements (21) for connecting the parking lock housing (3) to a housing (36) of the electric drive assembly (40);
a sleeve-shaped shaft journal (4) which is rotatably supported in the first bearing receptacle (10) about a rotational axis (A4), wherein the shaft journal (4) comprises a connecting profile (19) for being connected to a driveshaft (37) of the electric drive assembly (40) in a rotationally fixed manner;
a ratchet wheel (5) which is connected to the shaft journal (4) in a rotationally fixed way and which is received in a receiving space (11) between the base portion (8) and the cover portion (13);
a locking element (6) which is movably supported in the parking lock housing (3) and which can be transferred into a locking position in which the locking element (6) blocks a rotational movement of the ratchet wheel (5), and into a releasing position in which the locking element (6) releases the ratchet wheel (5) so that the ratchet wheel (5) and the driveshaft (37) connected thereto are freely rotatable;
a controllable actuator (7) connected to the parking lock housing (3) and configured to selectively transfer the locking element (6) into the locking position or into the releasing position;
wherein a smallest inner diameter (D3) of the parking lock housing (3) in the region of the ratchet wheel (5) substantially corresponds to the largest outer diameter (D5) of the ratchet wheel (5).

2. Parking lock unit according to claim 1,
**characterised in that**
the smallest inner diameter (D3) of the parking lock housing (3) in the region of the ratchet wheel (5) is greater than the greatest outer diameter (D5) of the ratchet wheel (5) and smaller than 1.3 times the greatest outer diameter (5) of the ratchet wheel (5).

3. Parking lock unit according to claim 1 or 2,
**characterised in**
**that** the parking lock housing (3) comprises an axial length (L3) which is smaller than 1.5 times the axial length (L4) of the shaft journal (4).

4. Parking lock unit according to any one of claims 1 to 3,
**characterised in**
**that** the shaft journal (4) for torque introduction only comprises the connecting profile (19) for rotationally fixed connection to the output shaft (37) of the electric drive assembly (40) and the connection (21) with the ratchet wheel (5).

5. Parking lock unit according to any one of claims 1 to 4,
**characterised in**
**that** the parking lock housing (3) comprises a cover portion (13) with a through opening (14) with a second bearing receptacle (15), wherein a cover-side end of the shaft journal (4) axially extends into the through opening (14).

6. Parking lock unit according to any one of claims 1 to 5,
**characterised in**
**that** an axially movable actuating member (28) is provided, which is movable by the actuator (7) into a first axial direction (R1) and which is loaded by spring means (34) into a second direction (R2) opposite the first direction,
wherein the actuating member (28) cooperates with the locking element (6) in such a way that the actuating member (2), when moving in the first axial direction, releases the locking element (6) and, when moving in the second axial direction, loads the locking element (6) into the locking position.

7. An electric drive assembly for driving a motor vehicle, comprising:
a housing assembly (36);
an electric machine (42) with a motor shaft (37) provided in the form of a hollow shaft which is rotatably drivable around a rotational axis (A37);
a reduction gearing (43) which is equipped to slow down a torque introduced by the motor shaft (37), wherein the reduction gearing comprises a transmission shaft (48) which is offset relative to the motor shaft (37);
a differential gearing (44) with a differential carrier (55) and two output gears (60, 61), wherein the differential gearing (44) is configured to transmit a rotational movement introduced from the reduction gearing to the differential carrier (55) to the two output gears (60, 61);
a parking lock unit (2) with a ratchet wheel (5), a locking element (6) and a controllable actuator (7), wherein the ratchet wheel (5) is arranged coaxially relative to the rotational axis (A37) and is connected to the motor shaft (37) in a rotational fixed way, wherein the locking element (6) cooperates with the ratchet wheel and is controllable by the actuator (7) in the closing sense in order to inhibit a rotational movement of the ratchet wheel (5), and is controllable in the opening sense in order to release the ratchet wheel (5),
wherein the differential gearing (44) and the parking lock unit (2) are arranged on opposed sides of the electric machine (42);
wherein a first housing part (63) of the housing assembly (36) comprises at an end opposed to the differential gearing (44) a base portion (70) with a through opening (69), wherein the motor shaft (37) extends through the through opening (69);
wherein the parking lock assembly (2) comprises a parking lock housing (3) with a connecting portion (21);
wherein the parking lock assembly (2) is positioned on the base portion (70) from the outside and wherein the connecting portion (21) of the parking lock housing (3) is connected to the base portion (70) of the housing assembly (36); and
wherein the shaft journal (4) of the parking lock unit (2) is connected to the motor shaft (37) of the electric machine (42) in a rotationally fixed way.

8. Electric drive assembly according to claim 7,
**characterised in**
**that** the shaft journal (4) of the parking lock unit (2) is connected to the motor shaft (37) of the electric machine (42) in a rotationally fixed way.

9. Electric drive assembly according to one of claims 7 or 8,
**characterised in**
**that** the parking lock housing (3) comprises a cover portion (13) with a central through opening (14), wherein a shaft bearing (16) is provided in the cover portion for rotatably supporting an output shaft connected to the differential gearing (44), wherein the motor shaft (37), respectively the shaft journal (4) connected thereto, extend axially into the cover portion (13) of the parking lock housing (2).

10. Electric drive assembly according to any one of claim 7 to 9,
**characterised in**
**that** a rotary pulse encoder (71) is provided for sensing a rotational position of the electric machine (42), wherein the rotary pulse encoder (71) is arranged in an annular receiving chamber formed between the base portion (70) of the first housing part (63) and the base portion (8) of the parking lock assembly (2).

11. Electric drive assembly according to any one of claims 7 to 10,
**characterised in**
**that** the housing assembly (36) comprises a second housing part (64) in which the differential gearing (44) is arranged, and an intermediate wall (65) which is arranged between the first housing part (63) and the second housing part (64),
wherein the intermediate wall (65) comprises a first bearing receptacle for receiving a first shaft bearing for the motor shaft (37) and a second bearing receptacle for receiving a second shaft bearing for the transmission shaft (48),
wherein the motor shaft (37) comprises a shaft portion connected to the rotor of the electric machine (42), a bearing portion rotatably supported in the intermediate wall (65), and a drive gear (47), wherein the drive gear (47) projects freely into a receiving chamber formed behind the intermediate wall (65).

12. Electric drive assembly according to any one of claims 7 to 11,
**characterised in**
**that** an intermediate plate (66) is provided, which is arranged between the intermediate wall (65) and the second housing portion (64), and
**that** an annular channel is formed between the motor shaft (37) and the output shaft extending through the motor shaft (37), with a first mouth facing the differential gearing (44) and a second mouth remote from the differential gearing (44);
wherein the intermediate plate (66) of the housing assembly (36) comprises a through opening (80) through which the output shaft extends, wherein an annular gap is formed between the output shaft and the intermediate plate (66) through which lubricant can flow from the transmission chamber in which the differential gearing (44) is received into the annular channel.

13. Electric drive assembly according to claim 12,
**characterised in**
**that** the intermediate plate (66) comprises a lubricant guiding geometry which is designed to guide lubricant into a mouth region of the first mouth of the annular channel, so that the lubricant can flow through the annular channel to the second mouth.

14. Electric drive assembly according to any one of claims 7 to 13,
**characterised in**
**that** the parking lock unit (2) is designed as a pre-mountable unit according to any one of claims 1 to 6 which, when the ratchet wheel (5) and the motor shaft (37) are arranged coaxially, can be positioned axially from the outside on a base part (70) of the housing portion (63), in which the electric machine (42) is received, and can be connected thereto.

## Revendications

1. Ensemble de frein de stationnement pour un dispositif d'entraînement électrique destiné à entraîner un véhicule automobile, comprenant :
un carter de frein de stationnement (3) qui comporte une partie de fond inférieur (8) pourvue d'un logement de palier (10) ainsi que sur une extrémité placée du côté du fond inférieur, des éléments de liaison (21), destinés à relier le carter de frein de stationnement (3) avec un carter (36) du dispositif d'entraînement électrique (40) ;
un épaulement d'arbre (4) en forme de douille, qui est logé de manière rotative autour d'un axe de rotation (A4) dans le premier logement de palier (10), l'épaulement d'arbre (4) comportant un profilé de liaison (19) destiné à la liaison solidaire en rotation avec un arbre d'entraînement (37) du dispositif d'entraînement électrique (40) ;
une roue de sécurité (5) qui est reliée de manière solidaire en rotation avec l'épaulement d'arbre (4) et qui est réceptionnée dans un espace de logement (11) entre la partie de fond inférieur (8) et la partie formant couvercle (13) ;
un élément de blocage (6) qui est logé en étant mobile dans le carter de frein de stationnement (3) et qui est susceptible d'être amené dans une position de fermeture, dans laquelle l'élément de blocage (6) bloque un déplacement en rotation de la roue de sécurité (5) et dans une position de libération, dans laquelle l'élément de blocage (6) libère la roue de sécurité (5), de telle sorte que la roue de sécurité (5) et l'arbre d'entraînement (37) relié avec celle-ci soient librement rotatifs ;
un actionneur (7) susceptible d'être commandé qui est relié avec le carter de frein de stationnement (3) et qui est conçu de sorte à amener sélectivement l'élément de blocage (6) dans la position de fermeture ou dans la position de libération ;
un diamètre intérieur (D3) le plus petit du carter de frein de stationnement (3) dans la région de la roue de sécurité (5) correspondant sensiblement à un diamètre extérieur (D5) le plus grand de la roue de sécurité (5).

2. Ensemble de frein de stationnement selon la revendication 1,
**caractérisé en ce que**
le plus petit diamètre intérieur (D3) du carter de frein de stationnement (3) dans la région de la roue de sécurité (5) est supérieur au plus grand diamètre extérieur (D5) de la roue de sécurité (5) et inférieur à 1,3 fois le plus grand diamètre extérieur (D5) de la roue de sécurité (5).

3. Ensemble de frein de stationnement selon la revendication 1 ou 2,
**caractérisé en ce que**
le carter de frein de stationnement (3) présente une longueur axiale (L3) qui est inférieure à 1,5 fois la longueur axiale (L4) de l'épaulement d'arbre (4).

4. Ensemble de frein de stationnement selon l'une quelconque des revendications 1 à 3,
**caractérisé en ce que**
l'épaulement d'arbre (4) destiné à introduire le couple comporte exclusivement le profilé de liaison (19), destiné à la liaison solidaire en rotation avec l'arbre de sortie (37) du dispositif d'entraînement électrique (40), ainsi que la liaison (21) avec la roue de sécurité (5).

5. Ensemble de frein de stationnement selon l'une quelconque des revendications 1 à 4,
**caractérisé en ce que**
le carter de frein de stationnement (3) comporte une partie formant couvercle (13), pourvue d'un orifice de passage (14) avec un deuxième logement de palier (15), une extrémité du côté couvercle de l'épaulement d'arbre (4) s'étendant en direction axiale jusque dans l'orifice de passage (14).

6. Ensemble de frein de stationnement selon l'une quelconque des revendications 1 à 5,
**caractérisé**
**en ce qu'**il est prévu un élément d'actionnement (28) mobile en direction axiale, qui est déplaçable par l'actionneur (7) dans une première direction axiale (R1) et qui est contraint par des moyens à ressort (34) dans une deuxième direction (R2) opposée à la première direction,
l'élément d'actionnement (28) coopérant avec l'élément de blocage (6), de telle sorte que lors d'un déplacement dans la première direction axiale, l'élément d'actionnement (28) libère l'élément de blocage (6) et lors d'un déplacement dans la deuxième direction axiale, contraigne l'élément de blocage (6) dans la position de fermeture.

7. Dispositif d'entraînement électrique destiné à entraîner un véhicule automobile, comprenant :
un agencement de carter (36) ;
une machine électrique (42) pourvue d'un arbre moteur (37) conçu sous la forme d'un arbre creux, qui est susceptible d'être entraîné en rotation autour d'un axe de rotation (A37),
un réducteur de vitesse (43) qui est conçu pour réduire un couple de rotation introduit par l'arbre moteur (37), le réducteur de vitesse comportant un arbre de transmission (48) qui est placé en décalage par rapport à l'arbre moteur (37) ;
une transmission différentielle (44), pourvue d'une cage de différentiel (55) et de deux roues de sortie (60, 61), la transmission différentielle (44) étant conçue pour transmettre sur les deux roues de sortie (60, 61) un déplacement en rotation induit par le réducteur de vitesse sur la cage de différentiel (55) ;
un ensemble de frein de stationnement (2) pourvu d'une roue de sécurité (5), d'un élément de blocage (6) et d'un actionneur (7) susceptible d'être commandé, la roue de blocage (5) étant placée de manière coaxiale par rapport à l'axe de rotation (A37) et étant reliée de manière solidaire en rotation avec l'arbre moteur (37), l'élément de blocage (6) coopérant avec la roue de sécurité (5) et étant susceptible d'être actionnée par l'actionneur (7) dans le sens de fermeture, pour inhiber un déplacement en rotation de la roue de sécurité (5) et étant susceptible d'être actionnée dans le sens d'ouverture pour libérer la roue de sécurité (5) ;
la transmission différentielle (44) et l'ensemble de frein de stationnement (2) étant placés sur des côtés en vis-à-vis de la machine électrique (42) ;
une première pièce de carter (63) de l'agencement de carter (36) comportant sur une extrémité en vis-à-vis de la transmission différentielle (44) une partie de fond inférieur (70) pourvue d'un orifice de passage (69), l'arbre moteur (37) s'étendant à travers l'orifice de passage (69) ;
l'ensemble de frein de stationnement (2) comportant un carter de frein de stationnement (3), pourvu d'une partie de liaison (21),
l'ensemble de frein de stationnement (2) étant monté par l'extérieur sur la partie de fond inférieur (70) et la partie de liaison (21) du carter de frein de stationnement (3) étant reliée avec la partie de fond inférieur (70) de l'agencement de carter (36) ; et
l'épaulement d'arbre (4) de l'ensemble de frein de stationnement (2) étant relié de manière solidaire en rotation avec l'arbre moteur (37) de la machine électrique (42).

8. Dispositif d'entraînement électrique selon la revendication 7,
**caractérisé en ce que**
l'épaulement d'arbre (4) de l'ensemble de frein de stationnement (2) est relié de manière solidaire en rotation par l'intermédiaire d'une connexion enfichable par complémentarité de forme avec l'arbre moteur (37) de la machine électrique (42).

9. Dispositif d'entraînement électrique selon l'une quelconque des revendications 7 ou 8,
**caractérisé en ce que**
le carter de frein de stationnement (3) comporte une partie formant couvercle (13) pourvue d'un orifice de passage (14) central, dans la partie formant couvercle étant prévu un palier d'arbre (16), destiné au logement en rotation d'un arbre de sortie relié avec la transmission différentielle (44),
l'arbre moteur (37), respectivement l'épaulement d'arbre (4) relié avec celui-ci s'étendant en direction axiale jusque dans la partie formant couvercle (13) du carter de frein de stationnement (2) .

10. Dispositif d'entraînement électrique selon l'une quelconque des revendications 7 à 9,
**caractérisé**
**en ce qu'**il est prévu un capteur de moment angulaire (71), destiné à détecter une position en rotation de la machine électrique (42), le capteur de moment angulaire (71) étant placé dans un espace de logement annulaire formé entre la partie de fond inférieur (70) de la première pièce de carter (63) et la partie de fond inférieur (8) de l'ensemble de frein de stationnement (2).

11. Dispositif d'entraînement électrique selon l'une quelconque des revendications 7 à 10,
**caractérisé en ce que**
l'agencement de carter (36) comporte une deuxième pièce de carter (64) dans laquelle est placée la transmission différentielle (44), ainsi qu'une paroi intermédiaire (65) qui est placée entre la première pièce de carter (63) et la deuxième pièce de carter (64),
la paroi intermédiaire (65) comportant un premier logement de palier destiné à recevoir un premier palier d'arbre pour l'arbre moteur (37), ainsi qu'un deuxième logement de palier, destiné à recevoir un deuxième palier d'arbre pour l'arbre de transmission (48) ;
l'arbre moteur (37) comportant un tronçon d'arbre relié avec le rotor de la machine électrique (42), un tronçon de palier logé en rotation dans la paroi intermédiaire (65) et une roue d'entraînement (47), la roue d'entraînement (47) saillant librement dans un espace de logement formé derrière la paroi intermédiaire (65).

12. Dispositif d'entraînement électrique selon l'une quelconque des revendications 7 à 11,
**caractérisé**
**en ce qu'**il est prévu une plaque intermédiaire (66) qui est placée entre la paroi intermédiaire (65) et la deuxième partie de carter (64) et
**en ce qu'**entre l'arbre moteur (37) et l'arbre de sortie s'étendant à travers l'arbre moteur (37) est formé un canal annulaire, pourvu d'une première embouchure qui fait face à la transmission différentielle (44) et d'une deuxième embouchure éloignée de la transmission différentielle (44) ;
la plaque intermédiaire (66) de l'agencement de carter (36) comportant un orifice de passage (80) à travers lequel s'étend l'arbre de sortie, entre l'arbre de sortie et la plaque intermédiaire (66) étant formée une fente annulaire, à travers laquelle un agent lubrifiant peut s'écouler dans le canal annulaire, à partir d'un espace de transmission dans lequel est réceptionnée la transmission différentielle (44).

13. Dispositif d'entraînement électrique selon la revendication 12,
**caractérisé en ce que**
la plaque intermédiaire (66) présente une géométrie conductrice d'agent lubrifiant qui est conçue pour conduire un agent lubrifiant dans une zone d'embouchure de la première embouchure, de sorte que l'agent lubrifiant puisse s'écouler à travers le canal annulaire vers la deuxième embouchure.

14. Dispositif d'entraînement électrique selon l'une quelconque des revendications 7 à 13,
**caractérisé en ce que**
l'ensemble de frein de stationnement (2) est conçu sous la forme d'une unité modulaire pré-assemblable selon l'une quelconque des revendications 1 à 6, qui lorsque la roue de sécurité (5) et l'arbre moteur (37) sont placés de manière coaxiale, est susceptible d'être posée en direction axiale par l'extérieur sur une partie de fond inférieur (70) de la partie de carter (63) dans laquelle est réceptionnée la machine électrique (42) et d'être reliée avec celle-ci.
